# EUROPÄISCHE PATENTSCHRIFT

(11) **EP 3 077 684 B1**
(45) Veröffentlichungstag und Bekanntmachung des Hinweises auf die Patenterteilung: **14.03.2018**
(21) Anmeldenummer: 14821189.9
(22) Anmeldetag: 23.12.2014
(51) Int. Cl.: F16B 21/07, F16C 11/06

(54) **RINGFÖRMIGE STECKKUPPLUNG SOWIE EIN HERSTELLUNGS- UND EIN VERBINDUNGSVERFAHREN DAFÜR**
ANNULAR PLUG COUPLING, AND PRODUCTION METHOD AND CONNECTION METHOD THEREFOR
ACCOUPLEMENT ANNULAIRE PAR EMBOÎTEMENT ET PROCÉDÉ DE FABRICATION ET D'ASSEMBLAGE DUDIT ACCOUPLEMENT

(30) Priorität: 23.12.2013 DE 202013011533 U
(43) Veröffentlichungstag der Anmeldung: 12.10.2016
(73) Patentinhaber: Böllhoff Verbindungstechnik GmbH, 33649 Bielefeld (DE)
(72) Erfinder: METTEN, Andreas, 33829 Borgolzhausen (DE); FRITZSCH, Jasmin, 33790 Halle (DE)
(74) Vertreter: HWP Intellectual Property
(86) Internationale Anmeldenummer: PCT/EP2014/079165
(87) Internationale Veröffentlichungsnummer: WO 2015/097222

(56) Entgegenhaltungen:
- EP-A2- 0 590 317
- EP-A2- 1 850 017
- DE-A1-102007 041 537

## Beschreibung

### 1. Gebiet der Erfindung

Die vorliegende Erfindung betrifft eine ringförmige Steckkupplung, die in einer Bauteilöffnung eines ersten Bauteils befestigbar ist, sowie ein Herstellungsverfahren und ein Verbindungsverfahren für diese Steckkupplung.

### 2. Hintergrund der Erfindung

Im Stand der Technik sind verschiedene Steckkupplungen bekannt, die aus einem aufnehmenden Kupplungsteil und einem Bolzen mit einem Verbindungskopf, beispielsweise ein Kugelkopf, bestehen. Diese Steckkupplungen sind meist kappenförmig ausgebildet, wie man anhand von US 5,580,204 erkennen kann. Diese Kappe nimmt einerseits lösbar einen Kugelkopf eines Kugelbolzens auf, andererseits dienen axial durchbrochene Seitenwände gleichzeitig zur federnden Befestigung des Kugelkopfes und des Kupplungsteils in einer Bauteilöffnung eines Bauteils. Diese Segmentierung der Seitenwände der kappenförmigen Steckkupplung liefert nur eine begrenzte Festigkeit bei einer Belastung des Kugelkopfes durch eine kombinierte Zug- und Querkraft. Diese Belastung öffnet zumindest teilweise der Eingang des Kupplungsteils, sodass sich der aufgenommene Kugelkopf leicht lösen kann.

In DE 43 34 926 wird eine zentrale Rastkupplung federnd in einem Ring angeordnet. Dies gestattet eine Dämpfung von Querkräften. Der umgebende Haltering ist wiederum mittig befestigt, was aufgrund der segmentierten bzw. durchbrochenen Kupplungswand eine für ungünstig belastete Wandsegmente versagenswahrscheinliche Konzentration von mechanischen Spannungen zur Folge hat.

DE 10 2007 031 320 A1 und WO 99/13231 beschreiben ebenfalls kappenförmige Kupplungsteile unterschiedlicher Außenform. Prinzipiell werden sie auf die gleiche Weise in einer Bauteilöffnung, befestigt und nachteilig belastet, wie es oben im Zusammenhang mit der Steckkupplung gemäß US 5,580,204 beschrieben worden ist. Daher ist auch hier kein verlässlicher Halt des Kupplungskopfes gerade bei kombinierter Quer- und Zugbelastung realisierbar.

DE 202 16 836 U1 beschreibt ein kappenförmiges Kupplungsteil, das nur in einer seitlich offenen Aufnahmeöffnung eines Bauteils installierbar ist. Während sich ein umlaufender Ring geschlossen am Bauteil abstützt, wird eine Kugelpfanne mittig in diesem Ring gehalten. Dazu weist die Kugelpfanne einen umfänglich geschlossenen Kragen auf, der in radialer Richtung Dämpfungsfalten umfasst und mit dem der Ring umlaufend verbunden ist. Neben der großen Bauhöhe durch die Kappenform der Steckkupplung lässt der umlaufende Kragen nur eine begrenzte Dämpfung von Radialschwingungen zu. Axiale Ausgleichs- oder Dämpfungsbewegungen sind ebenfalls nur eingeschränkt möglich, da sich hier einerseits die Form des geschlossenen umlaufenden Kragens sowie die zum Halten des Kugelkopfs erforderliche Materialwahl der Kugelpfanne nachteilig bemerkbar machen. Zudem erfordert die Befestigung des kappenförmigen Kupplungsteils eine angepasste Aufnahme mit nachteiligem Platzbedarf und einem gewissen Fertigungsaufwand.

Es ist daher die Aufgabe vorliegender Erfindung, eine platzsparende sowie einfach installierbare Steckkupplung bereitzustellen, deren Dämpfungs- und/oder Toleranzausgleichsverhalten konstruktiv anpassbar ist.

### 3. Zusammenfassung der Erfindung

Die obige Aufgabe wird durch eine ringförmige Steckkupplung gemäß dem unabhängigen Patentanspruch 1 gelöst. Des Weiteren offenbart vorliegende Erfindung zur Lösung der obigen Aufgabe ein Herstellungsverfahren für diese ringförmige Steckkupplung gemäß dem unabhängigen Patentanspruch 12 und ein Verbindungsverfahren für ein erstes und ein zweites Bauteil mithilfe der ringförmigen Steckkupplung gemäß dem unabhängigen Patentanspruch 11. Weiterentwicklungen sowie vorteilhafte Ausgestaltungen vorliegender Erfindung gehen aus der folgenden Beschreibung, den begleitenden Zeichnungen und den anhängenden Ansprüchen hervor.

Die erfindungsgemäße ringförmige Steckkupplung ist in einer Bauteilöffnung eines ersten Bauteils befestigbar. Die Steckkupplung weist zudem die folgenden Merkmale auf: eine zentral angeordnete Kupplungsaufnahme, insbesondere eine Kugelpfanne, mit der ein Kupplungskopf eines zweiten Bauteils lösbar verbindbar ist, und einen Zwischenring mit einer Mehrzahl krummlinig und radial einwärts verlaufender erster Federelemente, die mit der Kugelpfanne verbunden sind, und einer Mehrzahl krummlinig und radial auswärts verlaufender zweiter Federelemente, die an einem radial auswärtigen Ende eine Rastverbindung aufweisen, sodass die Steckkupplung in der Bauteilöffnung, verrastbar ist.

Die erfindungsgemäße Steckkupplung nutzt einen Zwischenring, in dessen radialem Innenraum die Kupplungsaufnahme zur Aufnahme des Kupplungskopfes des zweiten Bauteils angeordnet ist. Basierend auf dieser Anordnung weist die erfindungsgemäße Steckkupplung eine geringe Bauhöhe und somit einen im Vergleich zu den aus dem Stand der Technik bekannten kappenförmigen Steckkupplungen reduzierten Platzbedarf auf. Mithilfe der ersten und zweiten sich radial erstreckenden Federelemente ist die zentral angeordnete Kugelpfanne doppelt gedämpft und/oder in eine oder mehrere Richtungen im Raum begrenzt bewegbar angeordnet. Denn mithilfe der krummlinigen Gestalt der ersten und zweiten Federelemente sowie aufgrund der bevorzugten Formgebung und Orientierung dieser Federelemente werden einerseits Ausgleichsbewegungen in unterschiedliche Richtungen gewährleistet und/oder andererseits eine konstruktiv einstellbare Dämpfung von radialen und/oder axialen mechanischen Belastungen realisiert. Zu diesem Zweck weisen die ersten und zweiten Federelemente bevorzugt unterschiedliche Formgestaltungen auf, sodass die radial außen angeordneten zweiten Federelemente andere mechanische Belastungszustände aufnehmen bzw. dämpfen können als die radial innerhalb des Zwischenring angeordneten ersten Federelemente.

Gemäß einer weiteren bevorzugten Ausführungsform vorliegender Erfindung ist die Kupplungsaufnahme der Steckkupplung eine Kugelpfanne, die zumindest eine umlaufende und nicht durchbrochene Seitenwand aufweist. In diesem Zusammenhang ist es weiterhin bevorzugt, dass die Kugelpfanne gegenüberliegend zu ihrer Einsetzöffnung offen oder geschlossen ausgebildet ist. Diese Gestaltungsalternativen sind in Abhängigkeit von der geforderten Stabilität der Steckkupplung sowie der Gewichts- und Platzanforderungen der Steckkupplung frei wählbar. Während bei einer gegenüber der Einsetzöffnung geschlossen ausgebildeten Kugelpfanne der vorzugsweise eingesetzte Kugelkopf nicht mehr sichtbar ist, ermöglicht eine Öffnung gegenüberliegend zur Einsetzöffnung der Kugelpfanne einen Blick auf den eingesetzten Kugelkopf. Somit ist über eine Öffnung gegenüber der Einsetzöffnung eine gewisse Kontrollfunktion realisierbar, da mit ihr die Einsetzposition des Kugelkopfes in der Kugelpfanne verifiziert werden kann. Des Weiteren hat sich als vorteilhaft erwiesen, dass eine einseitig geschlossen ausgebildete Kugelpfanne eine Schutzfunktion vor Verschmutzung der mechanischen Verbindung zwischen Kugelkopf und Kugelpfanne gewährleistet. Auf diese Weise ist weitestgehend verhindert, dass Staub und anderer Schmutz in den Spalt zwischen Kugelpfanne und Kugelkopf eindringt, wodurch die Lebensdauer der Verbindung zwischen Kugelpfanne und Kugelkopf verlängert wird.

Es ist weiterhin bevorzugt, dass die oben beschriebene Steckkupplung integral ausgebildet ist und aus nur einem Werkstoff oder einer Werkstoffkombination besteht. Die integrale, also zusammenhängende, Ausbildung der Steckkupplung stellt sicher, dass diese Steckkupplung eine ausreichende Stabilität aufweist. Diese Stabilität wird zudem durch die geeignete Werkstoffwahl und auch durch eine eventuelle Werkstoffkombination unterstützt. Ist die Steckkupplung erfindungsgemäß bevorzugt aus nur einem Werkstoff hergestellt, vereinfacht dies das gesamte Herstellungsverfahren und unterstützt zudem die Integrität der Steckkupplung. Denn bei der Verwendung von nur einem Werkstoff ist es nicht erforderlich, dass verlässliche Verbindungen zwischen unterschiedlichen Werkstoffen hergestellt werden müssen. Damit scheiden also Grenzflächenprobleme zwischen unterschiedlichen Werkstoffen aus. Zudem sorgt das vereinfachte Herstellungsverfahren für reduzierte Kosten im Vergleich zur Kombination unterschiedlicher Werkstoffe in der Steckkupplung. Darüber hinaus ist gemäß einer weiteren Ausführungsform die Steckkupplung aus verschiedenen Werkstoffen hergestellt. Dies umfasst unter anderem das Anspritzen von einzelnen Komponenten der Steckkupplung aus Kunststoff, wie vorzugsweise der ersten und/oder zweiten Federarme, an den Zwischenring und/oder die Kugelpfanne. Gemäß einer weiteren Ausführungsform werden eine Auswahl von Komponenten der Steckkupplung aus Kunststoff oder einem anderen Werkstoff hergestellt und nachfolgend mit einem anderen Kunststoff umspritzt. Es ist ebenfalls bevorzugt, Federelemente aus Metall mit Kunststoff zu umspritzen und/oder direkt in die Konstruktion der Steckkupplung einzuformen oder an diese anzuformen.

Erfindungsgemäß bevorzugt sind die ersten und/oder zweiten Federelemente der ringförmigen Steckkupplung als wellenförmig oder U-förmig verlaufender Steg ausgebildet, der jeweils vollständig oder zumindest teilweise in Richtung einer Radialebene und/oder einer Axialebene und/oder einer Zwischenebene zwischen Radial- und Axialebene der Steckkupplung verläuft.

Die bevorzugte wellenförmige oder U-förmige Gestalt der als erste und/oder zweite Federelemente eingesetzten Stege gewährleistet zunächst eine federnde oder elastische Verlängerung oder Verkürzung des jeweiligen Stegs in seiner Längsrichtung. Zudem sind die bevorzugten Stege vorzugsweise bandähnlich oder flächig ausgebildet, sodass sie eine Breite aufweisen, die die Dicke des Stegs übersteigt. Wird ein derartiger Steg in Dickenrichtung belastet, dann ist eine federnde Ausgleichsbewegung möglich. Bei einer Belastung des Stegs in Breitenrichtung zeigt der Steg hingegen einen stärkeren Auslenkungswiderstand verglichen zur Belastung in Dickenrichtung. Daher wird über die Ausgestaltung der ersten und zweiten Federelemente als Steg und deren gezielte Orientierung innerhalb der Steckkupplung ein richtungsabhängiges Dämpfungsverhalten oder Toleranzausgleichsverhalten einstellbar. Verläuft daher beispielsweise ein stegförmiges Federelement in Richtung einer Axialebene der Steckkupplung, dann sind Schwingungsbelastungen oder ein Toleranzausgleich in radialer Richtung möglich, während eine Auslenkung der Kugelpfanne in axialer Richtung eingeschränkt ist. Verlaufen die Federelement in Richtung einer Radialebene, dann sind aufgrund der wellenförmigen Ausgestaltung der stegförmigen Federelemente radiale Belastungen und Toleranzen ausgleichbar. Gleichzeitig wird bevorzugt aber auch ein Ausgleich von axialen Belastungen und Toleranzen aufgrund der Länge der Federelemente gewährleistet. Um weitere Dämpfungssituationen gezielt einstellen zu können, verlaufen alle oder eine Auswahl der ersten und zweiten Federelemente in Richtung einer Zwischenebene zwischen Radial- und Axialebene. Gemäß einer weiteren Ausführungsform vorliegender Erfindung sind alle oder eine Auswahl der ersten und/oder zweiten Federelemente um ihre radiale Verlaufsrichtung verdreht angeordnet. Auf dieser Grundlage verlaufen die ersten und/oder zweiten Federelemente zumindest teilweise bezogen auf ihre Verlaufsrichtung in Richtung der Axial- und/oder Radial- und/oder der Zwischenebene. Dies umfasst unter anderem, dass ein erstes Federelement in Richtung der Radialebene an der Kugelpfanne befestigt ist und in Richtung einer Zwischenebene oder der Axialebene mit dem Zwischenring verbunden ist.

Zur weiteren bevorzugten Einstellung des Federverhaltens der Federelemente sind die ersten und zweiten Federelemente blattfederartig mit einem Breiten-Dicken-Verhältnis >1, vorzugsweise mindestens 2 oder mindestens 2,5 oder mindestens 4, ausgebildet.

Gemäß einer weiteren bevorzugten Ausgestaltung vorliegender Erfindung ist der Zwischenring in eine Mehrzahl von Segmenten unterteilt, die jeweils mit mindestens einem ersten Federelement verbunden sind. Während der Zwischenring in seiner bevorzugten geschlossenen bzw. durchgehenden Ausgestaltung die erfindungsgemäße ringförmige Steckkupplung stabilisiert, sorgen die erfindungsgemäß bevorzugten Segmente des Zwischenrings für eine zusätzliche Flexibilität der Steckkupplung. Diese Flexibilität dient vorzugsweise der Aufnahme bzw. dem Ausgleich von mechanischen Belastungen und/oder der Anpassung der Steckkupplung an vorhandene Toleranzen bei der Verbindung des ersten und zweiten Bauteils mithilfe der ringförmigen Steckkupplung. Denn mithilfe der Mehrzahl von Segmenten, die den Zwischenring bilden, können Teilbereiche des Zwischenrings, also einzelne oder mehrere Segmente, leichter in eine bestimmte Belastungsrichtung ausweichen als es der vollständige Zwischenring tun könnte. Dies eröffnet die bevorzugte Möglichkeit, bei gleichbleibender Fertigkeit des Materials der Steckkupplung ihr weitere elastische Flexibilität in ihrer Gesamtkonstruktion zu verleihen.

Gemäß einer weiteren bevorzugten Ausführungsform vorliegender Erfindung sind die zweiten Federelemente der ringförmigen Steckkupplung U-förmig ausgebildet, sodass ein verrastender Schenkel des U-förmigen Federelements radial auswärts vom Zwischenring beabstandet ist. Vorzugsweise verlaufen die Schenkel des U-förmigen Federelements in axialer Richtung der Steckkupplung. Basierend auf dem radialen Abstand des einen Schenkels des U-förmigen zweiten Federelements vom Zwischenring, gewährleisten die zweiten Federelemente Ausgleichsbewegungen bei mechanischen Belastungen oder auftretenden Toleranzen in der Radialebene der Steckkupplung. Des Weiteren erleichtern diese U-förmig geformten zweiten Federelemente das Einsetzen und vorzugsweise Einschnappen der ringförmigen Steckkupplung in der Bauteilöffnung. Da die zweiten Federelemente verrastende radial außen liegende Schenkel aufweisen, muss die ringförmige Steckkupplung in eine Bauteilöffnung eingedrückt bzw. eingeschnappt werden, ohne dass eine aufwendige oder konstruktiv angepasste Aufnahme für die Steckkupplung im ersten Bauteil ausgebildet sein muss.

Durch die in axialer Richtung in die Bauteilöffnung eingepresste Steckkupplung werden die zweiten Federelemente radial einwärts gedrückt und schnappen durch bevorzugte Rastnasen in der Bauteilöffnung ein. Vorzugsweise bilden diese Rastnasen des zweiten Federelements in axialer Richtung der Steckkupplung einen Hinterschnitt aus, sodass das erste Bauteil zwischen der Rastnase und einem Gegenlager an der ringförmigen Steckkupplung haltbar ist. Dieses bevorzugte Gegenlager ist auf den durch die Rastnase gebildeten Hinterschnitt abgestimmt. Während sich das erste Bauteil bzw. die ringförmige Steckkupplung zumindest in axialer Richtung über das Gegenlager am ersten Bauteil abstützt, realisiert die Mehrzahl der radial federnd ausgebildeten zweiten Federelemente eine feste, vorzugsweise eine zentrierte Anordnung der Steckkupplung innerhalb der Bauteilöffnung. Sobald die ringförmige Steckkupplung in der Bauteilöffnung befestigt ist, ist ein Kugelkopf mit der Steckkupplung lösbar verbindbar. Vorzugsweise ist dieser Kugelkopf mit einem zweiten Bauteil verbunden, sodass über den Kugelkopf und die ringförmige Steckkupplung eine lösbare Verbindung zwischen einem ersten und einem zweiten Bauteil herstellbar ist.

Dieses Verbindungsverfahren des ersten und zweiten Bauteils lässt sich daher folgendermaßen zusammenfassen: Bereitstellen des ersten Bauteils mit der Bauteilöffnung, Befestigen der erfindungsgemäßen ringförmigen Steckkupplung in der Bauteilöffnung des ersten Bauteils, Bereitstellen des zweiten Bauteils mit einem Bolzen mit Kugelkopf und Einrasten des Kugelkopfes des Bolzens in die ringförmige Steckkupplung. Alternativ dazu ist es ebenfalls bevorzugt, den mit dem zweiten Bauteil verbundenen Bolzen mit Kugelkopf zunächst in der Steckkupplung zu verrasten bzw. mit ihr zu verbinden. Nachfolgend wird dann das zweite Bauteil mit Bolzen und Steckkupplung zur Öffnung im ersten Bauteil bewegt und dort die Steckkupplung in der Öffnung befestigt, vorzugsweise eingerastet.

Vorliegende Erfindung offenbart zudem ein Herstellungsverfahren für die oben beschriebene Steckkupplung. Dieses Herstellungsverfahren weist die folgenden Schritte auf: Bereitstellen einer Spritzgussform, die die komplementäre Gestalt der ringförmigen Steckkupplung aufweist, Spritzgießen der Steckkupplung und Entformen der Steckkupplung aus der Spritzgussform.

### 4. Kurze Beschreibung der begleitenden Zeichnung

Die bevorzugten Ausführungsformen vorliegender Erfindung werden unter Bezugnahme auf die begleitenden Zeichnungen näher erläutert. Es zeigen:
- Figur 1: eine perspektivische Ansicht einer ersten bevorzugten Ausführungsform vorliegender Erfindung,
- Figur 2: eine weitere perspektivische Ansicht der bevorzugten Ausführungsform gemäß Figur 1,
- Figur 3: eine teilweise perspektivische Schnittansicht der bevorzugten Ausführungsform gemäß Figur 1,
- Figur 4: eine teilweise Schnittansicht der installierten ringförmigen Steckkupplung gemäß der ersten Ausführungsform in Verbindung mit einem Kugelbolzen,
- Figur 5A: eine teilweise perspektivische Schnittansicht einer weiteren bevorzugten Ausführungsform der vorliegenden Erfindung,
- Figur 5B: eine teilweise perspektivische Schnittansicht einer weiteren bevorzugten Ausführungsform der vorliegenden Erfindung
- Figur 6: eine perspektivische Ansicht der ringförmigen Steckkupplung gemäß einer weiteren bevorzugten Ausführungsform installiert in einer Bauteilöffnung,
- Figur 7: eine teilweise perspektivische Schnittansicht der ringförmigen Steckkupplung gemäß einer weiteren Ausführungsform installiert in einer Bauteilöffnung,

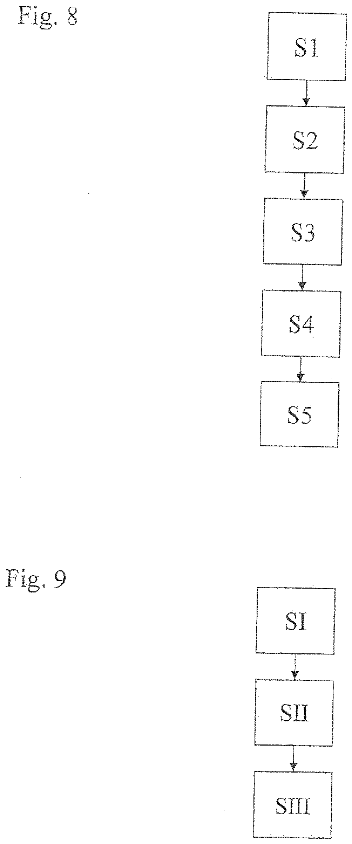

- Figur 8: ein Flussdiagramm einer bevorzugten Ausführungsform eines Verbindungsverfahrens und
- Figur 9: ein Flussdiagramm einer bevorzugten Ausführungsform eines Herstellungsverfahren der ringförmigen Steckkupplung.

### 5. Detaillierte Beschreibung der bevorzugten Ausführungsformen

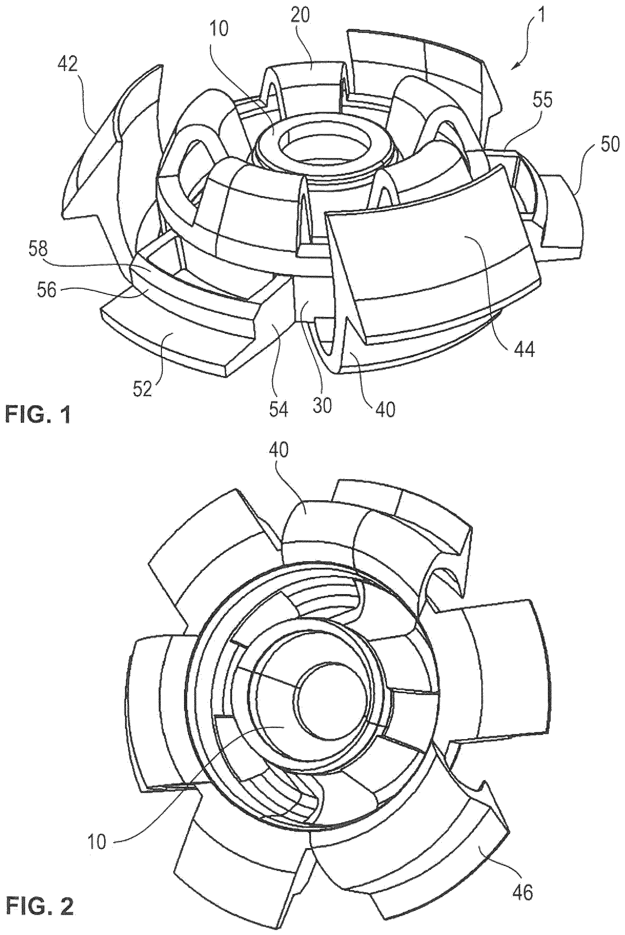

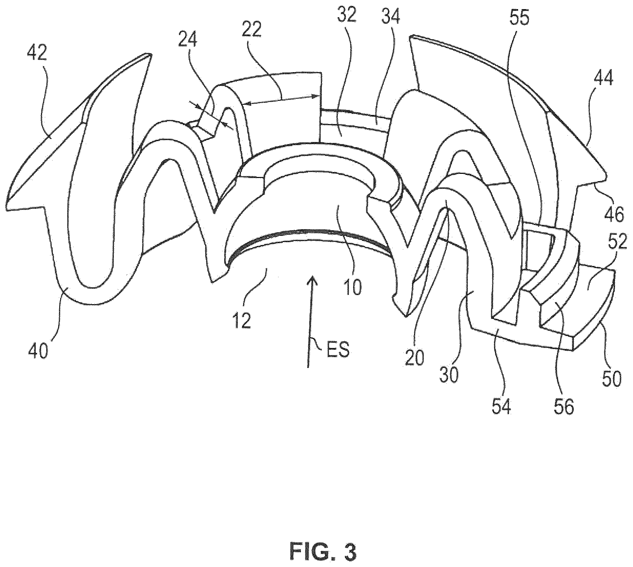

Figuren 1 und 2 zeigen eine erste bevorzugte Ausführungsform einer erfindungsgemäßen ringförmigen Steckkupplung 1 in einer perspektivischen Ansicht, teilweise von oben (Figur 1) und von unten (Figur 2). Die gleiche ringförmige Steckkupplung 1 ist in Figur 3 als eine perspektivische teilweise Schnittansicht dargestellt.

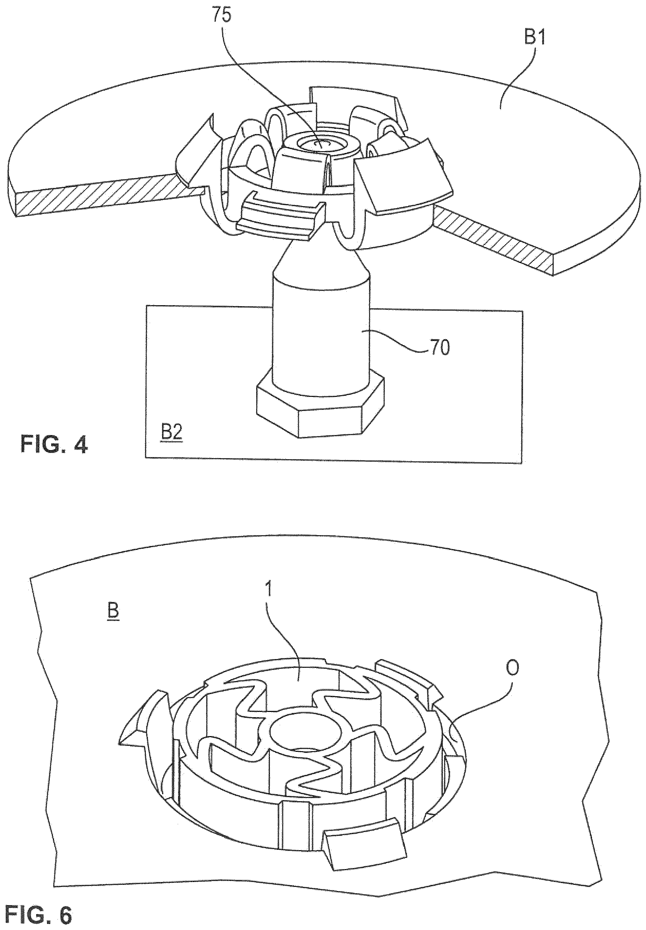

Die ringförmige Steckkupplung umfasst vorzugsweise eine zentral angeordnete Kugelpfanne 10 als Kupplungsaufnahme zur Aufnahme eines Kupplungskopfes, insbesondere ein Kugelbolzen 70 mit einem Kugelkopf 75, eines zweiten Bauteils oder allgemein eines Kugelbolzens 70 (siehe Figur 4). Zentral bedeutet in diesem Zusammenhang eine Anordnung der Kugelpfanne 10 innerhalb eines unten näher erläuterten Zwischenrings 30, wobei diese Anordnung vorzugsweise mittig oder außermittig in dem Zwischenring realisiert ist. Aufgrund ihrer angepassten Form ist mithilfe der Kugelpfanne 10 eine lösbare Schnappverbindung mit dem Kugelkopf 75 des Kugelbolzens 70 herstellbar. Da die ringförmige Steckkupplung 1 in einer Bauteilöffnung O eines ersten Bauteils B befestigt ist (Figur 4), ist über die Verbindung zwischen Kugelpfanne 10 und Kugelkopf 75 eine Verbindung zwischen dem ersten und einem zweiten Bauteil herstellbar.

Trotz der lösbaren Schnappverbindung zwischen der Kugelpfanne 10 und dem Kugelkopf 75 lässt die Kugelpfanne 10 eine Bewegung des Kugelbolzens 70 in einem bestimmten Raumwinkel zu. Zudem sind alternativ zur Verbindung zwischen Kugelpfanne 10 und Kugelkopf 75 auch andere Schnappverbindungen einsetzbar, in denen ein Funktionskopf in einer komplementär dazu ausgebildeten Kupplungsaufnahme lösbar befestigbar ist.

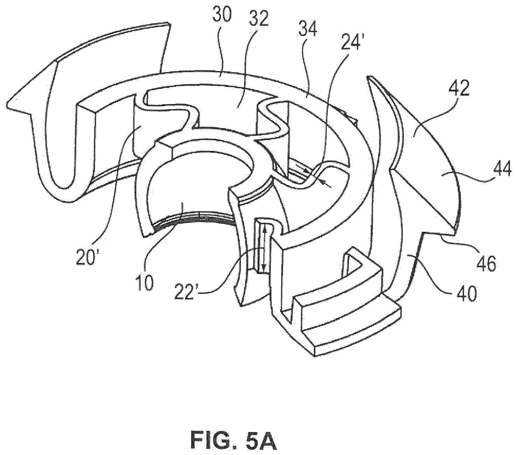

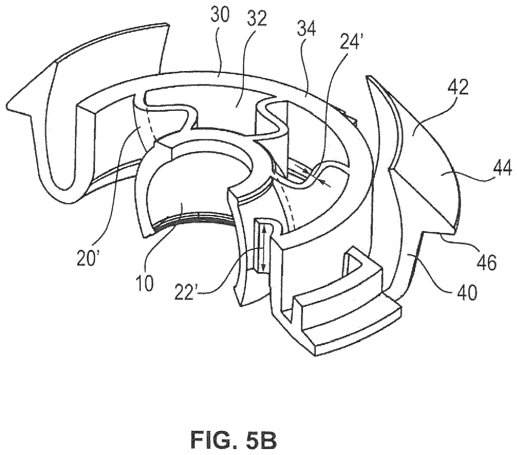

Die Kugelpfanne 10 ist vorzugsweise mittig in dem Zwischenring 30 angeordnet. Vorzugsweise hat der Zwischenring 30 eine axiale Ausdehnung in der Größenordnung einer Höhe der Kugelpfanne 10. Radial einwärts ist der Zwischenring 30 über eine Mehrzahl erster Federelemente 20 mit der Kugelpfanne 10 verbunden. An der Kugelpfanne 10 sind die ersten Federelemente 20 an der radialen Außenseite befestigt. Gemäß unterschiedlicher bevorzugter Ausführungsformen vorliegender Erfindung sind die ersten Federelemente 20 an der radialen Innenseite 32 des Zwischenrings 30 oder an einer seiner axialen Stirnseiten 34 befestigt (siehe Figuren 3 und 5). Gemäß der in den Figuren 1 bis 3 gezeigten bevorzugten Ausführungsform der ringförmigen Steckkupplung 1 sind die ersten Federelemente 20 an der radialen Außenseite der Kugelpfanne 10 und an der axialen Stirnseite 34 des Zwischenrings 30 befestigt. Dazwischen weisen die ersten Federelemente 20 eine krummlinige, vorzugsweise eine wellenförmige oder U-förmige, Gestalt auf. Vorzugsweise ist eine axiale Ausdehnung der Kugelpfanne 10 und des Zwischenrings 30 auf ein Minimum beschränkt, um die Vorteile einer geringen Einbauhöhe zu erzielen. Die bevorzugt U-förmig ausgebildeten ersten Federelemente 20 greifen deshalb benachbart zum Eingang 12 der Kugelpfanne 10 und an der dem Eingang 12 abgewandten Stirnseite 34 des Zwischenrings 30 an. Aufgrund dieser Konstruktion weist die Steckkupplung 1 in axialer Richtung einen flachen und platzsparenden ringförmigen Aufbau auf, der die axiale Größe der Kugelpfanne 10 vorzugsweise nur geringfügig oder gar nicht übersteigt.

Wie man anhand von Figur 5 erkennen kann, ist es ebenfalls bevorzugt, die ersten Federelemente 20' wellenförmig auszubilden. Gemäß der in Figur 5 gezeigten bevorzugten Ausführungsform verlaufen die ersten Federelemente 20' in Richtung einer Axialebene der Steckkupplung 1. Gemäß der Anordnung der ersten Federelemente 20 in den Figuren 1 bis 3 verlaufen die ersten Federelemente 20 in Richtung einer Radialebene. Es versteht sich, dass die ersten Federelemente 20 der Figuren 1 bis 3 auch wellenförmig ausgebildet sein können.

Es ist weiterhin bevorzugt, dass die ersten 20; 20' und/oder zweiten Federelemente 40 (siehe unten) in Richtung einer geneigten Zwischenebene zwischen der Axialebene und der Radialebene verlaufen. Des Weiteren ist es bevorzugt, dass zumindest die ersten Federelemente 20, 20' in ihrer Längsrichtung in sich verdreht aufgebaut sind. Auf diese Weise beginnt beispielsweise das radial innere Ende des ersten Federelements 20' in einer Axialebene, während es in Richtung einer Zwischenebene zwischen der Axialebene und der Radialebene ausläuft. Dies ist in Figur 5B veranschaulicht. In diesem Zusammenhang ist es ebenfalls bevorzugt, mehrere erste Federelemente 20, 20' miteinander zu kombinieren, die in Richtung einer Axialebene und/oder in Richtung einer Radialebene und/oder in Richtung einer geneigten Zwischenebene zwischen Radialebene und Axialebene verlaufen. Natürlich kann diese Kombination unterschiedlicher erster Federelemente 20; 20' ebenfalls mindestens ein weiteres erstes Federelement aufweisen, welches entlang seiner Längsachse verdreht ist, sodass es in seinem Verlauf in Richtung unterschiedlicher Ebenen verlaufen kann, wie beispielsweise in Richtung der Axialebene, der Radialebene und/oder einer dazwischen liegenden geneigten Ebene. Mit dieser speziellen Konfiguration der erfindungsgemäßen Steckkupplung 1 sind je nach Anwendungsfall der Steckkupplung 1 ganz gezielte Anpassungen an das erforderliche Dämpfungsverhalten und/oder Toleranzausgleichsverhalten realisierbar.

Die ersten Federelemente 20, 20' weisen bevorzugt eine Breite 22, 22' und eine Dicke 24, 24' auf. Weiter bevorzugt ist die Breite 22, 22' größer als die Dicke 24, 24', sodass die ersten Federelemente bandähnlich geformt sind. Um eine ausreichende Stabilität bei gleichzeitiger richtungsspezifischer Flexibilität zu erzielen, ist das Breiten-Dicken-Verhältnis größer als 1, bevorzugt mindestens 2 oder mindestens 2,5 oder mindestens 4. Aufgrund der gegebenen Breiten-Dicken-Verhältnisse ist es ebenfalls denkbar, die ersten Federelemente 20; 20' in Form eines federnden Metallbands bereitzustellen. Bezogen auf den Verlauf des ersten Federelements 20, 20' in Richtung der Axial- oder Radialebene der Steckkupplung 1 ist daher entsprechend die Breite 22' des ersten Federelements 20 parallel zu einer Axialebene und die Breite 22 des ersten Federelements 20 parallel zu einer Radialebene angeordnet. Da die ersten Federelemente 20, 20' zwischen der Kugelpfanne 10 und dem Zwischenring 30 krummlinig, wellenförmig oder U-förmig ausgebildet sind, gewährleisten sie eine begrenzte Bewegbarkeit der Kugelpfanne 10 in radialer Richtung. Die Bewegbarkeit der Kugelpfanne 10, die durch die radiale Verlängerung und Verkürzung der ersten Federelemente 20, 20' ermöglicht wird, dient der Schwingungsdämpfung, dem Ausgleich von Toleranzen und/oder dem Ausgleich von Bewegungen zwischen dem ersten B1 und dem zweiten Bauteil B2. Verlaufen die ersten Federelemente 20, 20' in einer Radialebene (siehe Figuren 1-3) wird bevorzugt auch ein axialer Schwingungs-, Toleranz- und/oder Bewegungsausgleich zwischen den Bauteilen B1, B2 bereitgestellt.

Bei der bevorzugten Anordnung der ersten Federelemente 20 in einer Axialebene (siehe Figur 5) verläuft die Breite 22' in axialer Richtung der Steckkupplung 1. Bei Belastung der Kugelpfanne 10 in Figur 5 in axialer Richtung werden die ersten Federelemente 20' nur geringfügig oder vernachlässigbar ausgelenkt, weil die Breite 22' parallel zur Belastungsrichtung angeordnet ist. In diesem Fall sind radiale Ausgleichs- oder Dämpfungsbewegungen der Steckkupplung vorzugsweise nur über eine Mehrzahl von zweiten Federelementen 40 möglich, die sich radial auswärts vom Zwischenring 30 erstrecken.

Es ist ebenfalls bevorzugt, die in den Figuren 3 und 5 gezeigten ersten Federelemente 20', 20 in der Konstruktion nur einer Steckkupplung 1 zu mischen bzw. abzuwechseln, um ein angepasstes Dämpfungsverhalten der Steckkupplung 1 zu erzielen.

Gemäß einer weiteren bevorzugten Ausführungsform vorliegender Erfindung wird die Dicke 24, 24' und/oder die Breite 22, 22' der ersten Federelemente 20, 20' angepasst, um eine bestimmte Flexibilität der ersten Federelemente 20, 20' einzustellen. So unterstützt beispielsweise in der Steckkupplung 1 der Figur 3 eine geringere Breite 22 und/oder eine geringere Dicke 24 der ersten Federelemente 20 eine erhöhte Bewegbarkeit der Kugelpfanne 10 in axialer und radialer Richtung. Des Weiteren erzielt eine geringe Breite 22' in der Steckkupplung 1 der Figur 5 eine höhere radiale Bewegbarkeit. Zudem ist es bevorzugt, die Länge der ersten Federelemente 20, 20' zu erhöhen, um die Bewegbarkeit der Kugelpfanne 10 zu verbessern, oder zu verringern, um die Stabilität oder Steifigkeit der Steckkupplung 1 zu steigern. Die Länge eines ersten Federelements 20, 20' bedeutet die Strecke zwischen Kugelpfanne 10 und Zwischenring 30 gemessen entlang der Oberfläche des ersten Federelements 20, 20'.

Gemäß einer weiteren nicht gezeigten Ausführungsform ist der Zwischenring 30 nicht durchgehend ausgebildet, sondern in eine Mehrzahl von Segmenten geteilt. Vorzugsweise ist jedes Segment mit mindestens einem ersten Federelement 20, vorzugsweise zwei Federelementen 20, verbunden. Aufgrund dieser Konstruktion wird gerade die Flexibilität der Steckkupplung 1 in axialer Richtung gesteigert.

Wie man anhand der Figuren 4, 6, 7 erkennen kann, wird zunächst das erste Bauteil B1 bereitgestellt (S1) und dann darin die Öffnung O erzeugt (Schritt S2), bevorzugt gebohrt, gesägt, geschnitten, gelasert, gestanzt oder dergleichen. Danach wird die ringförmige Steckkupplung 1 in der Öffnung O lösbar befestigt (Schritt S3), vorzugsweise eingerastet. Zum Befestigen in der Öffnung O weist die Steckkupplung 1 eine Mehrzahl zweiter Federelemente 40 auf, die sich radial auswärts vom Zwischenring 30 erstrecken. Dieser Befestigungsvorgang ist unabhängig davon realisierbar, ob bereits ein Kugelkopf 75 in der Kugelpfanne 10 eingesetzt ist oder nicht.

Gemäß einer bevorzugten Ausführungsform vorliegender Erfindung weisen die zweiten Federelemente 40 ebenfalls eine kurmmlinige Gestalt auf. Diese krummlinige Gestalt ist U-förmig, wellenförmig oder ähnlich geformt. Daher weisen die zweiten Federelemente 40 bei mechanischen Belastungen eine einstellbare Flexibilität auf, sodass auch die zweiten Federelemente 40 ähnlich wie die ersten Federelemente 20 einen Toleranzausgleich, eine Schwingungsdämpfung und/oder einen Ausgleich von Bewegungen zwischen dem ersten B1 und dem zweiten Bauteil B2 realisieren.

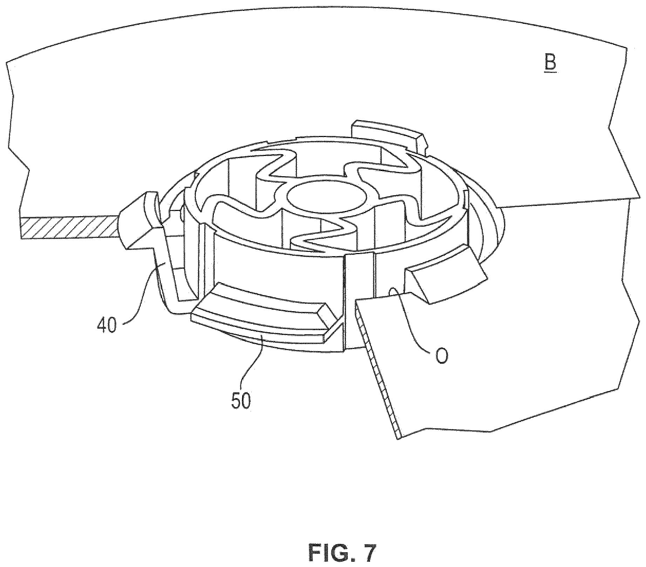

Wie man anhand der Figuren 4 und 7 erkennen kann, verrasten die zweiten Federelemente 40 die ringförmige Steckkupplung 1 in der Öffnung O des ersten Bauteils B. Zu diesem Zweck ist die Mehrzahl der zweiten Federelemente 40 über den Umfang des Zwischenrings 30 gleichmäßig verteilt angeordnet. Vorzugsweise sind mindestens zwei zweite Federelemente 40, bevorzugt drei oder mehr, vorgesehen, die gemäß den Ausführungsformen der Fig. 1-7 U-förmig geformt sind. Zudem weist jedes zweite Federelement 40 eine Rastnase 42 an einem Schenkel des U-förmigen zweiten Federelements 40 auf. D, umfasst eine Einführschräge 44 und eine Haltefläche 46. Da die zweiten Federelemente 40 radial federnd angeordnet sind, drückt die Einführschräge 44 der Rastnase 42 beim Einsetzen (Schritt S3) der Steckkupplung 1 in die Öffnung O das zweite Federelement 40 radial einwärts, sodass am Ende der Einführschräge 44 die Haltefläche 46 an einer Oberfläche des ersten Bauteils B einschnappen kann. Danach bildet die Haltefläche 42 einen Hinterschnitt entgegen einer Einsetzrichtung ES der Steckkupplung 1 in die Öffnung O.

Es versteht sich, dass die zweiten Federelemente 40 in gleicher Weise wie die ersten Federelemente 20 in ihrer Breite und Dicke und in ihrem Verlauf anpassbar sind, um die für den Anwendungsfall gewünschte Flexibilität der zweiten Federelemente und somit der Steckkupplung 1 zu erzielen. Dabei muss lediglich sichergestellt sein, dass die Befestigungsmittel am radial äußeren Ende der zweiten Federelemente 40 verlässlich die Steckkupplung 1 in der Öffnung O des ersten Bauteils B halten.

Um die Steckkupplung 1 beim Einsetzen in die Öffnung O des Bauteils B nicht wieder aus der Öffnung O herauszudrücken, ist vorzugsweise ein Gegenlager 50 vorgesehen. Das Gegenlager 50 erstreckt sich radial auswärts von dem Zwischenring 30 und stellt die Gegenfläche 52 bereit. Die Gegenfläche 52, die auch durch einen oder eine Mehrzahl von Haltepunkten (nicht gezeigt) gebildet werden kann, ist parallel zur Haltefläche 46 angeordnet. Ein Abstand zwischen Haltefläche 46 und Gegenfläche 52 ist bevorzugt kleiner oder gleich einer Dicke des Bauteils B1 ausgebildet. Auf diese Weise ist gewährleistet, dass das Bauteil B1 zwischen der Haltefläche 46 und der Gegenfläche 52 spielfrei gehalten wird. Dieses Halten wird vorzugsweise dadurch unterstützt, dass das Gegenlager 50 in axialer Richtung der Steckkupplung 1 federnd bzw. auslenkbar angeordnet ist. Zu diesem Zweck ist eine Dicke eines Stegs 54 derart eingestellt, dass das Gegenlager 50 bei ausreichender Stabilität auch eine ausreichende Flexibilität aufweist. Der Steg 54 befestigt das Gegenlager 50 am Zwischenring 30. Gemäß einer bevorzugten Ausführungsform vorliegender Erfindung ist der Steg 54 radial verlaufend gerade ausgebildet und an der radialen Außenseite des Zwischenrings 30 angeformt (siehe Figuren 1, 3, 5, 7). Ebenfalls bevorzugt ist der Steg 54 krummlinig geformt (nicht gezeigt).

Das Gegenlager 50 stellt zudem eine radiale Haltefläche 56 mit Einführschräge 58 bereit. Die radiale Haltefläche 56 stützt sich vorzugsweise nach dem Einsetzen der Steckkupplung 1 in der Öffnung O an deren radialer Innenwand ab. Dadurch wird die Steckkupplung 1 in radialer Richtung in der Öffnung O stabilisiert und ein radialer Versatz der Steckkupplung 1 bei radialer Belastung der zweiten Federelemente 40 reduziert. Vorzugsweise wird die radiale Haltefläche 56 in radialer Richtung durch eine zusätzliche Versteifungsrippe 55 verstärkt, die sich zwischen der radialen Haltefläche 56 und dem Zwischenring 30 erstreckt.

Aus der bevorzugten Anordnung von ersten 20 und zweiten Federelementen 40 ergibt sich eine verlässliche und stabile Anordnung der Kugelpfanne 10 in der Öffnung O des Bauteils B1. Die Konstruktion der Steckkupplung 1 garantiert dabei eine geringe Bauhöhe der Steckkupplung 1 in axialer Richtung, ein vorteilhaftes Dämpfungsverhalten mechanischer Schwingungen sowie einen effizienten Toleranzausgleich zwischen dem ersten und zweiten Bauteil. Schnappt (Schritt S5) nämlich der Kugelkopf 75 des mit dem zweiten Bauteil verbundenen Kugelbolzens 70 (Schritt S4) in die Kugelpfanne 10 ein, dann sind dabei radiale und/oder axiale Bewegungen der Kugelpfanne 10 ohne Stabilitätsverlust der Steckkupplung 1 möglich. Dabei ist hervorzuheben, dass die Stabilität und Flexibilität der Steckkupplung 1 nicht nur über eine geeignete Materialwahl der Steckkupplung 1 sondern gerade auch über die konstruktive Gestaltung der Steckkupplung 1 gezielt einstellbar ist.

Die oben beschriebenen bevorzugten Ausführungsformen der erfindungsgemäßen Steckkupplung 1 sind vorzugsweise integral ausgebildet. Gemäß einer ersten Ausführungsform besteht die erfindungsgemäße Steckkupplung 1 aus nur einem Werkstoff. Es ist weiterhin bevorzugt die Steckkupplung 1 aus einer Werkstoffkombination mit mindestens zwei unterschiedlichen Werkstoffen herzustellen. In diesem Zusammenhang bedeutet Werkstoffkombination die Bereitstellung unterschiedlicher Komponenten der Steckkupplung 1 aus unterschiedlichen Werkstoffen. Sofern die Steckkupplung aus nur einem Werkstoff besteht, wird dadurch ihr Herstellungsverfahren vereinfacht, während gleichzeitig eine ausreichende Stabilität und Lebensdauer der Steckkupplung 1 sichergestellt werden kann. Mithilfe der Kombination von mehreren Werkstoffen in der Steckkupplung 1 ist eine gezielte Anpassung an unterschiedliche Verbindungsverhältnisse denkbar. Zu diesen Verbindungsverhältnissen zählt beispielsweise ein spezielles Dämpfungsverhalten, was durch die Steckkupplung 1 realisiert werden soll. Daher ist es in diesem Zusammenhang bevorzugt, die ersten 20 und zweiten Federelemente 40 aus dem gleichen Werkstoff oder aus unterschiedlichen Werkstoffen herzustellen. Sofern die Steckkupplung 1 aus nur einem Werkstoff besteht, ist sie werkstoffeinstückig, beispielsweise mit dem unten beschriebenen Spritzgussverfahren hergestellt.

Während Kugelpfanne 10 und Zwischenring 30 aus demselben Werkstoff oder verschiedenen Werkstoffen hergestellt sind bzw. werden können, ist es gemäß einer weiteren Ausführungsform vorliegender Erfindung bevorzugt, im Vergleich zur Kugelpfanne und/oder zum Zwischenring die ersten Federelemente 20 aus einem anderen Werkstoff und die zweiten Federelemente 40 aus dem gleichen oder einem noch anderen Werkstoff herzustellen. Auf diese Weise sind unterschiedliche Eigenschaften im Toleranzausgleich oder im Dämpfungsverhalten der Steckkupplung allgemein und der ersten 20 und der zweiten Federelemente 40 gezielt einstellbar.

Folgende Werkstoffe werden einzeln oder in Kombination mit weiteren genannten Werkstoffen zur Herstellung der Steckkupplung 1 eingesetzt: Elastomere, thernoplastische Elastomere, Silikone, POM, PP (Polypropylene), PA (Polyamide) sowie weitere geeignete technische Kunststoffe.

Gemäß einer weiteren bevorzugten Ausführungsform vorliegender Erfindung werden in Abhängigkeit von der geforderten Stabilität der Steckkupplung 1 die zu verwendenden Kunststoffe zur Herstellung der Steckkupplung 1 allgemein über deren Shore-Härte und/oder den Elastizitätsmodul definiert. Daher sind Werkstoffe zur Herstellung der Steckkupplung 1 bevorzugt, die eine Shore-Härte im Bereich 50A-70D und weiter bevorzugt im Bereich von 50A-52D aufweisen. Im Hinblick auf den Elastizitätsmodul ist es allein oder in Kombination mit den oben genannten Shore-Härten bevorzugt, wenn der Werkstoff der Steckkupplung 1 einen Elastizitätsmodul von ≤5000 MPa und vorzugsweise von ≤3000 MPa aufweist. In diesem Zusammenhang ist hervorzuheben, dass zur Herstellung der Steckkupplung 1 ebenfalls Werkstoffe eingesetzt werden, die gut gereinigt werden können und zudem für den Einsatz in der lebensmittelverarbeitenden Industrie sowie der Medizintechnik und ähnlichen Bereichen zugelassen sind.

Aufgrund des breiten Materialspektrums und der Vielzahl konstruktiver Gestaltungsmöglichkeiten der Steckkupplung 1 ist die erfindungsgemäße Steckkupplung 1 in Kombination mit den verschiedensten schwingungs- und vibrationsbelasteten Maschinenteilen einsetzbar. Diese kommen bevorzugt aus dem Bereich Bau von Kraft-, Schienen-, Luft- und Wasserfahrzeugen. Aufgrund ihrer umfänglich geschlossenen zentralen Kupplungsaufnahme 10 und den segmentiert und offen angeordneten ersten und zweiten Federelemente 20, 20', 40 ist die Steckkupplung 1 sowie die damit hergestellte Verbindung einfach und gut zu reinigen. Aus diesem Grund ist die erfindungsgemäße Steckkupplung 1 gerade auch zur schwingungsdämpfenden Befestigung von Bauteilen in Maschinen der Lebensmittelbranche und der Pharmaindustrie sowie der Medizintechnik einsetzbar.

Erfindungsgemäß wird die ringförmige Steckkupplung mithilfe eines Spritzgussverfahrens hergestellt. Dazu wird zunächst eine Spritzgussform bereitgestellt (Schritt SI). Die Spritzgussform definiert einen Hohlraum, der die komplementäre Gestalt zur ringförmigen Steckkupplung 1 aufweist. Im nachfolgenden Schritt SII wird die ringförmige Steckkupplung in dieser Form spritzgegossen. Bevorzugt werden dazu Elastomere oder ähnlich stabile und einfach verarbeitbare Materialien eingesetzt. Im nachfolgenden Schritt SIII wird die hergestellte Steckkupplung aus der Spritzgussform entformt, und, falls erforderlich, nachbearbeitet.

### Bezugszetchenliste

- 1: ringförmige Steckkupplung
- 10: Kugelpfanne
- 12: Eingang der Kugelpfanne
- 20: erstes Federelement
- 22, 22': Breite des ersten Federelements
- 24, 24': Dicke des ersten Federelements
- 30: Zwischenring
- 32: radiale Innenseite des Zwischenrings
- 34: axiale Stirnseiten des Zwischenrings
- 40: zweites Federelement
- 42: Rastnase
- 44: Einführschräge
- 46: Haltefläche
- 50: Gegenlager
- 52: Haltefläche
- 54: Steg
- 55: Verstärkungsrippe
- 56: radiale Haltefläche
- 58: Einrührschräge
- 70: Kugelbolzen
- 75: Kugelkopf
- B1, B2: erstes und zweites Bauteil
- ES: Einsetzrichtung
- O: Öffnung

## Patentansprüche

1. Eine ringförmige Steckkupplung (1), die in einer Bauteilöffnung (O) eines ersten Bauteils (B1) befestigbar ist und die folgenden Merkmale aufweist:
a. eine zentral angeordnete Kupplungsaufnahme, insbesondere eine Kugelpfanne (10), mit der ein Kupplungskopf (75) eines zweiten Bauteils (B2) lösbar verbindbar ist, und
b. einen Zwischenring (30) mit
b.1 einer Mehrzahl krummlinig und radial einwärts verlaufender erster Federelemente (20), die mit der Kugelpfanne (10) verbunden sind, und
b.2 einer Mehrzahl krummlinig und radial auswärts verlaufender zweiter Federelemente (40), die an einem radial auswärtigen Ende eine Rastverbindung (42) aufweisen, sodass die Steckkupplung (1) in der Bauteilöffnung (O) verrastbar ist.

2. Steckkupplung (1) gemäß Anspruch 1, deren Kupplungsaufnahme eine Kugelpfanne (10) ist, die zumindest eine umlaufende und nicht durchbrochene Seitenwand aufweist.

3. Steckkupplung (1) gemäß Anspruch 1 oder 2, die integral ausgebildet ist und aus nur einem Werkstoff oder einer Werkstoffkombination besteht.

4. Steckkupplung (1) gemäß Anspruch 1, in der die ersten (20) und/oder zweiten Federelemente (40) als wellenförmig oder U-förmig verlaufender Steg (54) ausgebildet sind, der jeweils vollständig oder zumindest teilweise in Richtung einer Radialebene und/oder einer Axialebene und/oder einer Zwischenebene zwischen Radial- und Axialebene der Steckkupplung (1) verläuft.

5. Steckkupplung (1) gemäß Anspruch 2, in der die ersten (20) und zweiten Federelemente (40) blattfederartig mit einem Breiten-Dicken-Verhältnis >1, vorzugsweise mindestens 2 oder mindestens 2,5 oder mindestens 4, ausgebildet sind.

6. Steckkupplung (1) gemäß einem der vorhergehenden Ansprüche, in der der Zwischenring (30) eine Mehrzahl von Segmenten aufweist, die jeweils mit mindestens einem ersten Federelement (20) verbunden sind.

7. Steckkupplung (1) gemäß einem der vorhergehenden Ansprüche, in der die zweiten Federelemente (40) U-förmig ausgebildet sind, sodass ein verrastender Schenkel des U-förmigen Federelemente (40) radial auswärts vom Zwischenring (30) beabstandet ist.

8. Steckkupplung (1) gemäß einem der vorhergehenden Ansprüche, in der das zweite Federelement (40) eine Rastnase (42) aufweist, die in axialer Richtung der Steckkupplung (1) einen Hinterschnitt bildet, sodass das erste Bauteil (B1) zwischen der Rastnase (42) und einem Gegenlager (50) haltbar ist.

9. Steckkupplung (1) gemäß Anspruch 6, in der das Gegenlager (50) einen vom Zwischenring (30) radial auswärts ragenden Steg (54) umfasst, der eine axiale und eine radiale Anlagefläche (54) für das zweite Bauteil (B2) aufweist.

10. Ein erstes Bauteil (B1) und ein zweites Bauteil (B2), die über eine ringförmige Steckkupplung (1) gemäß einem der vorhergehenden Ansprüche miteinander verbunden sind, wobei das erste Bauteil (B1) eine Bauteilöffnung (O) mit der ringförmigen Steckkupplung (1) und das zweite Bauteil (B2) einen Bolzen (70) mit Kugelkopf verrastet in der ringförmigen Steckkupplung (1) aufweist.

11. Verbindungsverfahren für ein erstes und ein zweites Bauteil, das die folgenden Schritte aufweist:
Bereitstellen des ersten Bauteils mit einer Bauteilöffnung,
Befestigen einer ringförmigen Steckkupplung gemäß einem der Ansprüche 1 bis 10 in der Bauteilöffnung des ersten Bauteils,
Bereitstellen eines zweiten Bauteils mit einem Bolzen mit Kugelkopf und Einrasten des Kugelkopfes des Bolzens in die ringförmige Steckkupplung oder
zunächst Verrasten des mit dem zweiten Bauteil verbundenen Bolzens mit Kugelkopf in der Steckkupplung und nachfolgend
Bewegen des zweiten Bauteils mit Bolzen und Steckkupplung zur Öffnung im ersten Bauteil und
Befestigen, vorzugsweise Verrasten, der Steckkupplung in der Öffnung.

12. Herstellungsverfahren einer Steckkupplung gemäß einem der Ansprüche 1 bis 10, das die folgenden Schritte aufweist:
Bereitstellen einer Spritzgussform, die die komplementäre Gestalt der ringförmigen Steckkupplung aufweist,
Spritzgießen der Steckkupplung und
Entformen der Steckkupplung aus der Spritzgussform.

## Claims

1. An annular plug coupling (1) that can be fastened in a component opening (O) of a first component (B1) and which has the following features:
a. a centrally arranged coupling seat, particularly a ball socket (10), by means of which a coupling head (75) of a second component (B2) can be detachably connected, and
b. an intermediate ring (30) with
b.1 a plurality of curvilinear and radially inwardly extending first spring elements (20) which are connected with the ball socket (10), and
b.2 a plurality of curvilinear and radially outwardly extending second spring elements (40), which have a locking connection (42) at a radially outward end, so that the plug coupling (1) is lockable in the component opening (O).

2. Plug coupling (1) according to claim 1, the coupling seat of which is a ball socket (10) that has at least a circumferential and non-pierced sidewall.

3. Plug coupling (1) according to claim 1 or 2, which is integrally formed and consists of only one material or one material combination.

4. Plug coupling (1) according to claim 1, in which the first (20) and/or second spring elements (40) are formed as wavy or U-shaped extending web (54) extending completely or at least partly, respectively, in the direction of a radial plane and/or an axial plane and/or an intermediate plane between radial and axial plane of the plug coupling (1).

5. Plug coupling (1) according to claim 2, in which the first (20) and second spring elements (40) are formed leaf-spring-like with a width-thickness ratio > 1, preferably at least 2 or at least 2.5 or at least 4.

6. Plug coupling (1) according to one of the preceding claims, in which the intermediate ring (30) comprises a plurality of segments, which are each connected with at least one first spring element (20).

7. Plug coupling (1) according to one of the preceding claims, in which the second spring elements (40) are formed U-shaped, so that a locking leg of the U-shaped spring element (40) is spaced radially outwardly from the intermediate ring (30).

8. Plug coupling (1) according to one of the preceding claims, in which the second spring element (40) has a detent (42), which forms an undercut in the axial direction of the plug coupling (1), so that the first component (B1) can be retained between the detent (42) and a counter-bearing (50).

9. Plug coupling (1) according to claim 6, in which the counter-bearing (50) comprises a web (54) protruding radially outwardly from the intermediate ring (30), wherein the web (54) has an axial and a radial abutment surface (54) for the second component (B2).

10. A first component (B1) and a second component (B2) which are connected with each other by means of an annular plug coupling (1) according to one of the preceding claims, wherein the first component (B1) has a component opening (O) with the annular plug coupling (1) and the second component (B2) has a bolt (70) with a ball head that is locked within the annular plug coupling (1).

11. Connection method for a first and a second component, comprising the following steps:
providing the first component with a component opening,
fastening an annular plug coupling according to one of the claims 1 to 10 in the component opening of the first component,
providing a second component with a bolt with a ball head, and
locking the ball head of the bolt in the annular plug coupling or
first, locking of the bolt with ball head connected to the second component in the plug coupling and subsequently
moving the second component with bolt and plug coupling to the opening in the first component, and
fastening, preferably locking, the plug coupling in the opening.

12. Production method for a plug coupling according to one of the claims 1 to 10, comprising the following steps:
providing an injection mold having the complementary shape of the annular plug coupling,
injection molding of the plug coupling and
demolding of the plug coupling from the injection mold.

## Revendications

1. Accouplement annulaire par emboîtement (1), lequel peut être fixé dans une ouverture de composant (O) d'un premier composant (B1) et présente les caractéristiques suivantes :
a. un logement d'accouplement disposé de façon centrale, en particulier un coussinet sphérique (10) permettant de relier de façon détachable une tête d'accouplement (75) d'un deuxième composant (B2), et
b. une bague intermédiaire (30) avec
b.1 une pluralité de premiers éléments de ressort (20) s'étendant de façon curviligne et radialement vers l'intérieur, lesquels sont reliés au coussinet sphérique (10), et
b.2 une pluralité de deuxièmes éléments de ressort (40) s'étendant de façon curviligne et radialement vers l'extérieur, lesquels présentent un assemblage par encliquetage (42) à une extrémité radialement extérieure, de telle sorte que l'accouplement par emboîtement (1) peut être encliqueté dans l'ouverture de composant (O).

2. Accouplement par emboîtement (1) selon la revendication 1, dont le logement d'accouplement est un coussinet sphérique (10) présentant au moins une paroi latérale périphérique et non interrompue.

3. Accouplement par emboîtement (1) selon la revendication 1 ou 2, lequel est conçu intégralement et n'est constitué que d'un matériau ou d'une combinaison de matériaux.

4. Accouplement par emboîtement (1) selon la revendication 1, dans lequel les premiers (20) et/ou les deuxièmes éléments de ressort (40) sont conçus comme une âme (54) s'étendant de façon ondulée ou en forme de U, laquelle s'étend respectivement entièrement ou au moins partiellement dans la direction d'un plan radial et/ou d'un plan axial et/ou d'un plan intermédiaire entre le plan radial et le plan axial de l'accouplement par emboîtement (1).

5. Accouplement par emboîtement (1) selon la revendication 2, dans lequel les premiers (20) et deuxièmes éléments de ressort (40) sont conçus comme des ressorts à lame, avec un rapport de largeur à épaisseur > 1, de préférence au moins 2 ou au moins 2,5 ou au moins 4.

6. Accouplement par emboîtement (1) selon l'une des revendications précédentes, dans lequel la bague intermédiaire (30) présente une pluralité de segments, lesquels sont respectivement reliés au moins à un premier élément de ressort (20).

7. Accouplement par emboîtement (1) selon l'une des revendications précédentes, dans lequel les deuxièmes éléments de ressort (40) sont conçus en forme de U, de telle manière qu'une branche encliquetée de l'élément de ressort en forme de U (40) est espacée radialement vers l'extérieur par rapport à la bague intermédiaire (30).

8. Accouplement par emboîtement (1) selon l'une des revendications précédentes, dans lequel le deuxième élément de ressort (40) présente un ergot d'encliquetage (42) formant une contre-dépouille dans la direction axiale de l'accouplement par emboîtement (1), de telle manière que le premier composant (B1) peut être maintenu entre l'ergot d'encliquetage (42) et un contre-palier (50).

9. Accouplement par emboîtement (1) selon la revendication 6, dans lequel le contre-palier (50) comporte une âme (54) faisant saillie radialement vers l'extérieur sur la bague intermédiaire (30), laquelle présente une surface d'appui axiale et une radiale (54) pour le deuxième composant (B2).

10. Premier composant (B1) et deuxième composant (B2), lesquels sont reliés entre eux par le biais d'un accouplement annulaire par emboîtement (1) selon l'une des revendications précédentes, le premier composant (B1) présentant une ouverture de composant (O) avec l'accouplement annulaire par emboîtement (1) et le deuxième composant (B2) présentant un goujon (70) avec une tête sphérique encliquetée dans l'accouplement annulaire par emboîtement (1).

11. Procédé d'assemblage pour un premier et un deuxième composant, présentant les étapes suivantes :
- mise à disposition du premier composant avec une ouverture de composant,
- fixation d'un accouplement annulaire par emboîtement selon l'une des revendications 1 à 10 dans l'ouverture de composant du premier composant,
- mise à disposition d'un deuxième composant avec un goujon à tête sphérique et
- encliquetage de la tête sphérique du goujon dans l'accouplement annulaire par emboîtement, ou
- tout d'abord, encliquetage du goujon relié au deuxième composant avec la tête sphérique dans l'accouplement par emboîtement, puis
- déplacement du deuxième composant avec le goujon et l'accouplement par emboîtement vers l'ouverture dans le premier composant, et
- fixation, de préférence par encliquetage, de l'accouplement par emboîtement dans l'ouverture.

12. Procédé de fabrication d'un accouplement par emboîtement selon l'une des revendications 1 à 10, présentant les étapes suivantes :
- mise à disposition d'un moule d'injection présentant une forme complémentaire à celle de l'accouplement annulaire par emboîtement,
- moulage par injection de l'accouplement par emboîtement, et
- démoulage de l'accouplement par emboîtement hors du moule d'injection.
